# EUROPEAN PATENT APPLICATION

(11) **EP 4 617 943 A1**
(43) Date of publication of application: **17.09.2025**
(21) Application number: 25160269.4
(22) Date of filing: 26.02.2025
(51) Int. Cl.: G06F 40/106, G06F 3/04817, G06F 3/12

(54) **INFORMATION PROCESSING DEVICE, DISPLAY METHOD, AND COMPUTER PROGRAM**

(30) Priority: 13.03.2024 JP 2024038523
(71) Applicant: CASIO COMPUTER CO., LTD., Tokyo 151-8543 (JP)
(72) Inventor: Ito, Masahiro, Hachioji-shi, Tokyo 192-8556 (JP)
(74) Representative: Grünecker Patent- und Rechtsanwälte PartG mbB

(57) **Abstract**

An information processing device includes a processor configured to generate an electronic sticky note on which a print image of a selected electronic file is displayed. In a case where it is determined that the electronic file is to be printed over a plurality of pages, the processor is configured to generate a plurality of the electronic sticky notes corresponding to the number of pages.

## Description

### TECHNICAL FIELD

The present disclosure relates to an information processing device, a display method, and a computer program.

### BACKGROUND

For example, JP2017-182649A discloses a method for supporting generation of a material including a plurality of slides by using an information processing device such as a personal computer, in which a plurality of slide objects arranged on a work field are added or removed to or from a slide flow in response to a drag operation. The slide object corresponds to a slide such as a text, a handwritten object, an image, a sound, a video, or a web page.

### SUMMARY

When converting an electronic file having a plurality of pages into a sticky note by the information processing device described above, only an electronic sticky note in which a specific page among the plurality of pages is made into a summary image (thumbnail) is generated. That is, there was a problem in that even when generating electronic sticky notes from an electronic file printed with a plurality of pages, only a specific page is generated as an electronic sticky note.

In view of such a problem, one aspect of the present disclosure easily generates a plurality of electronic sticky notes for an electronic file having a plurality of pages.

An information processing device includes a processor configured to generate an electronic sticky note on which a print image of a selected electronic file is displayed. In a case where it is determined that the electronic file is to be printed over a plurality of pages, the processor is configured to generate a plurality of the electronic sticky notes corresponding to the number of pages.

According to the above aspect, a plurality of electronic sticky notes can be easily generated for an electronic file having a plurality of pages.

### BRIEF DESCRIPTION OF THE SEVERAL VIEWS OF THE DRAWINGS

FIG. 1 is a diagram illustrating a configuration example of a learning system according to an illustrative embodiment.
FIG. 2 is a block diagram illustrating a functional configuration example of a user terminal.
FIG. 3 is a diagram illustrating an operation example of the user terminal.

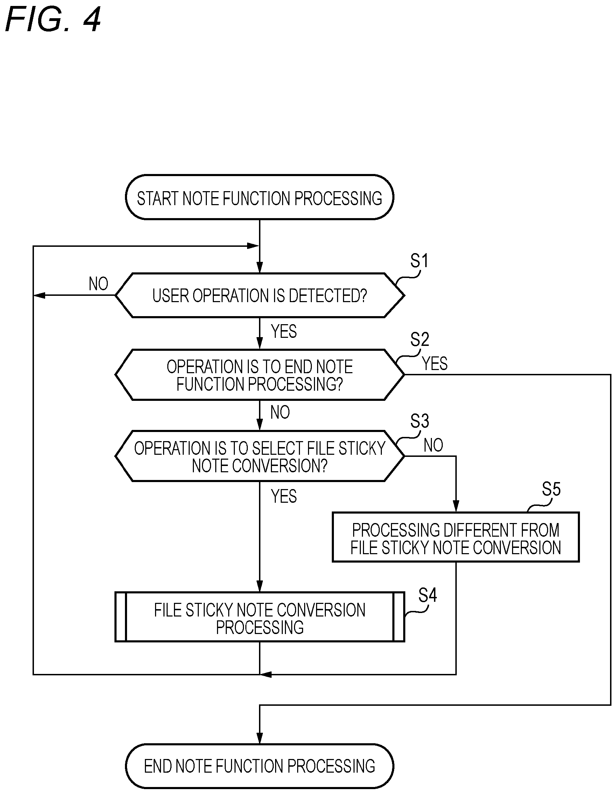

FIG. 4 is a flowchart illustrating an example of note function processing.
FIG. 5 is a flowchart illustrating an example of file sticky note conversion processing according to the illustrative embodiment.
FIG. 6A is a diagram illustrating a specific example of processing of converting an electronic file having a print layout of a plurality of pages into sticky notes.
FIG. 6B is a diagram illustrating a specific example of processing of converting an electronic file having a print layout of a plurality of pages into sticky notes.
FIG. 6C is a diagram illustrating a specific example of processing of converting the electronic file having a print layout of a plurality of pages into sticky notes.
FIG. 6D is a diagram illustrating a specific example of processing of converting the electronic file having a print layout of a plurality of pages into sticky notes.
FIG. 7A is a diagram illustrating a display example of the electronic sticky notes.
FIG. 7B is a diagram illustrating a display example of the electronic sticky notes.
FIG. 7C is a diagram illustrating a display example of electronic sticky notes.
FIG. 7D is a diagram illustrating a display example of the electronic sticky notes.
FIG. 8A is a diagram illustrating an example of a using method of the electronic sticky notes.
FIG. 8B is a diagram illustrating an example of a using method of the electronic sticky notes.

### DETAILED DESCRIPTION

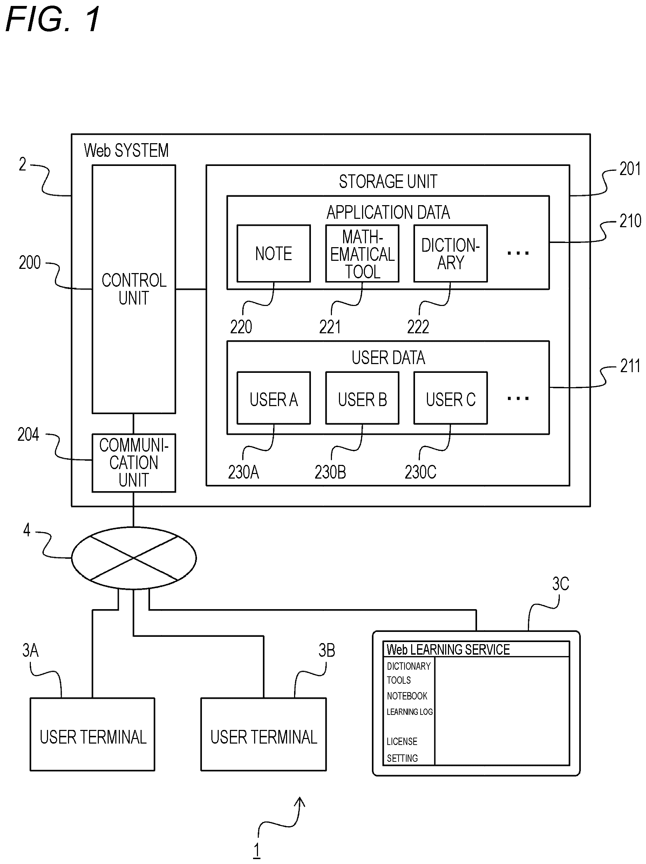

Hereinafter, an illustrative embodiment of the present disclosure will be described with reference to the drawings. An alphabet following a number in an illustrated reference numeral is intended to identify a plurality of components to which the numerical designation is assigned. In the following description of the present specification, only in a case in which only a specific component among a plurality of components to which the same numerical designation is assigned is targeted, an alphabet following the number is described. In other words, when "user terminal 3" is described, the user terminal may be any one of the three user terminals 3A to 3C illustrated in FIG. 1 or other user terminals not illustrated, and when "user terminal 3A" is described, the user terminal indicates only the user terminal to which the reference numeral 3A is assigned in FIG. 1.

A learning system 1 illustrated in FIG. 1 includes a Web system 2 and user terminals 3. The number of user terminals 3 is not limited to three. Users of the user terminal 3 include users who learn using the learning system 1, such as children, pupils, and students, and users who support learning, such as teachers. The Web system 2 and each of the user terminals 3 can be connected to a communication network 4 in a wireless or wired manner, and each of the user terminals 3 can communicate with the Web system 2 via the communication network 4.

The Web system 2 is a system that uses the communication network 4 to provide various functions related to user learning. The Web system 2 includes a control unit 200, a storage unit 201, and a communication unit 204 as illustrated in FIG. 1. The Web system 2 may include other functional blocks (not illustrated) such as an input unit and a display unit. The Web system 2 may be implemented by a single server or a plurality of servers. For example, the Web system 2 may be implemented by a Web server, an application server, and a database server. The term "server" in the present specification may be read as "computer".

The control unit 200 is configured to control an operation of the Web system 2. For example, the control unit 200 performs processing corresponding to an HTTP request from the user terminal 3, generates a screen corresponding to a result of the processing, and transmits the screen to the user terminal 3. The processing corresponding to the HTTP request includes processing of generating an electronic sticky note during the execution of a note function. Functions of the control unit 200 are provided by one or more processors that execute an OS program and various programs related to provision of the note function and the like. The processor may include a CPU (which is an abbreviation for Central Processing Unit).

The storage unit 201 includes an application data storage area 210 and a user data storage area 211, as non-transitory computer-readable storage media. The application data storage area 210 stores an application to be provided to a user via the communication network 4. The user data storage area 211 stores user data. The application data storage area 210 stores a first application 220 that provides the note function, a second application 221 that provides a mathematical tool, a third application 222 that provides dictionary contents, and the like. The note function may be a function that enables recording of learning contents, collected information, and the like using an electronic sticky note or the like to be described later, distribution and submission of an assignment, and the like. The mathematical tool is a tool that provides various functions related to mathematics such as calculation, graph drawing, and statistical processing. The dictionary content includes contents such as an English-Japanese dictionary, a Japanese-English dictionary, a Japanese dictionary, an English dictionary. In the user data storage area 211, various types of data associated with users who can use the functions of the Web system 2 are stored for each user. For example, user data 230A stores data such as a user ID, a login password, and a learning history of a user of the user terminal 3A, and user data 230B stores data such as a user ID, a login password, and a learning history of a user of the user terminal 3B. A storage device that provides a function of the storage unit 201 includes a ROM and a RAM as main storage devices, and an auxiliary storage device such as an HDD. The function of the storage unit 201 may be provided by a portable recording medium such as an optical disk, a storage device including a USB terminal, or a card-type storage device. The communication unit 204 connects the Web system 2 to the communication network 4 and communicates with an external device via the communication network 4. A function of the communication unit 204 is provided by a communication device that communicates with a node (communication device) of the communication network 4 according to a well-known communication standard.

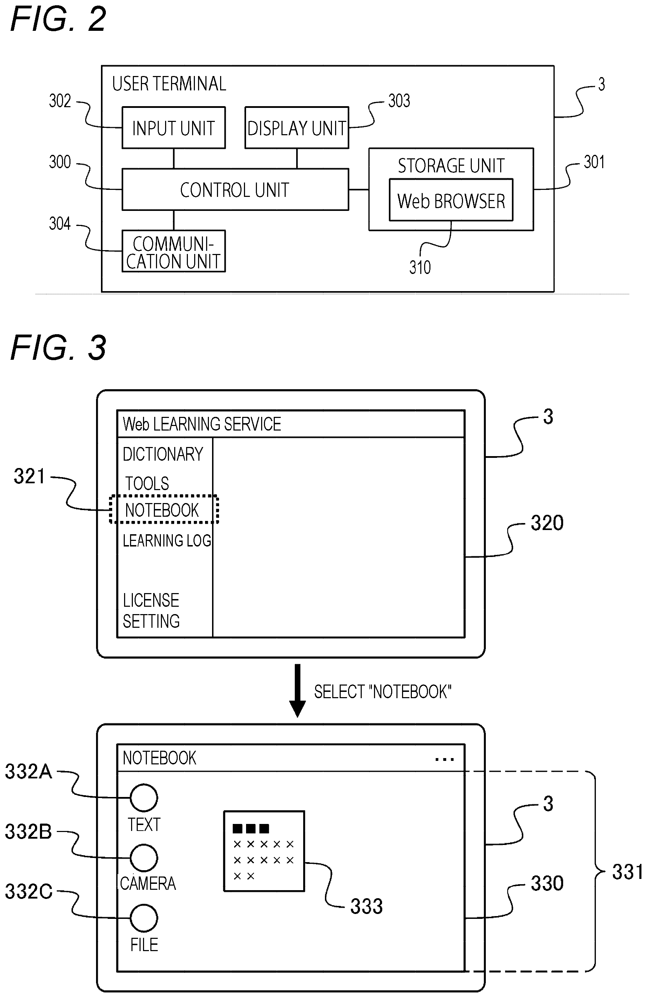

The user terminal 3 is an information processing device used by the user for learning. The user terminal 3 includes a control unit 300, a storage unit 301, an input unit 302, a display unit 303, and a communication unit 304 as illustrated in FIG. 2. The user terminal 3 may include other functional blocks (not illustrated) such as an imaging unit, a sound collecting unit, and a sound emitting unit. The information processing device as the user terminal 3 may be a personal computer having a communication function, a smartphone, or the like.

The control unit 300 is configured to control an operation of the user terminal 3. For example, the control unit 300 executes a Web browser to transmit an HTTP request to the Web system 2, and displays and outputs a display screen corresponding to an HTTP response received from the Web system 2. The control unit 300 can execute a program such as a script included in the HTTP response. A function of the control unit 300 is provided by one or more processors that execute an OS program and a program of a Web browser 310 for using the note function or the like. The processor may include a CPU.

The storage unit 301 stores the program of the Web browser 310. A storage device that provides a function of the storage unit 301 includes a ROM and a RAM as non-transitory computer-readable storage media, and an auxiliary storage device such as an HDD. The function of the storage unit 301 may be provided by a portable recording medium such as an optical disk, a storage device including a USB terminal, or a card-type storage device. The input unit 302 receives input of various types of information related to operations of the user terminal 3. The display unit 303 displays the various types of information related to the operations of the user terminal 3. A function of the display unit 303 is provided by a display device such as a dot matrix liquid crystal display. A function of the input unit 302 is provided by, for example, an input device such as a position detection device (digitizer), a keyboard, or a mouse disposed in a manner of overlapping a display area of the display device (display unit 303). The communication unit 304 connects the user terminal 3 to the communication network 4 and communicates with an external device via the communication network 4. A function of the communication unit 304 is provided by a communication device that communicates with a node (communication device) of the communication network 4 according to a well-known communication standard.

The user of the user terminal 3 can perform learning using the function provided by the Web system 2 by connecting the user terminal 3 to the Web system 2. The user terminal 3 is connected to the Web system 2 when the user ID and the password transmitted to the Web system 2 are authenticated by the Web system 2. A menu screen 320 illustrated in FIG. 3 is displayed on the user terminal 3 connected to the Web system 2. The menu screen 320 allows an item or the like that can be used for learning to be selected, and for example, when a user operation of selecting a character string 321 of "NOTEBOOK" is detected, the first application 220 that provides the note function is executed, and the display of the user terminal 3 is switched from the menu screen 320 to a note screen 330. The note screen 330 includes icons (objects) 332 for generating an electronic sticky note and a work area 331 in which a generated electronic sticky note 333 is displayed. The electronic sticky note 333 allows text, handwritten characters, figures, and the like to be written into, and can be moved in the work area 331 and associated (linked) with other electronic sticky notes. When the icon 332A of "TEXT" is selected, the electronic sticky note 333 having a plain background is generated, and when the icon 332B of "CAMERA" is selected, for example, an electronic sticky note having an image captured by a camera included in the user terminal 3 as a background is generated. When the icon 332C of "FILE" is selected, an electronic sticky note having a print image captured from an electronic file to be converted into a sticky note as a background is generated. The electronic sticky note generated by selecting the icon 332C of "FILE" allows the entire print layout of the electronic file converted into an electronic sticky note to be viewed by switching the display screen.

The user terminal 3 on which the note screen 330 is displayed performs, for example, note function processing illustrated in FIG. 3. When the control unit 300 of the user terminal 3 that has started the note function processing determines that a user operation has been detected (step S1; YES), data related to the user operation is transmitted to the control unit 200 of the Web system 2 via the communication unit 304, the communication network 4, and the communication unit 204, and the control unit 300 determines whether the user operation is to end the note function processing (step S2). When determining that the user operation is to end the note function processing (step S2; YES), the control unit 300 transmits an HTTP request for ending the note function to the control unit 200 of the Web system 2. When the note function processing ends, the display of the display unit 303 is switched from the note screen 330 to the menu screen 320.

When determining that the detected operation is not to end the note function processing (step S2; NO), the control unit 300 determines whether the detected operation is to select file sticky note conversion (step S3). The term "file sticky note conversion" in the present specification is intended to generate an electronic sticky note in which an electronic file can be edited and browsed, and may be, for example, an operation of selecting the icon 332C of "FILE" on the note screen 330 illustrated in FIG. 3. When determining that the operation is not to select the file sticky note conversion (step S3; NO), the control unit 300 performs processing corresponding to the detected operation different from the file sticky note conversion (step S5). Step S5 may include, for example, processing of transmitting an HTTP request corresponding to the detected operation to the control unit 200 of the Web system 2 and processing of displaying a screen corresponding to an HTTP response received from the control unit 200. Step S5 may be processing of writing text, handwritten characters, figures, and the like into the generated electronic sticky note 333.

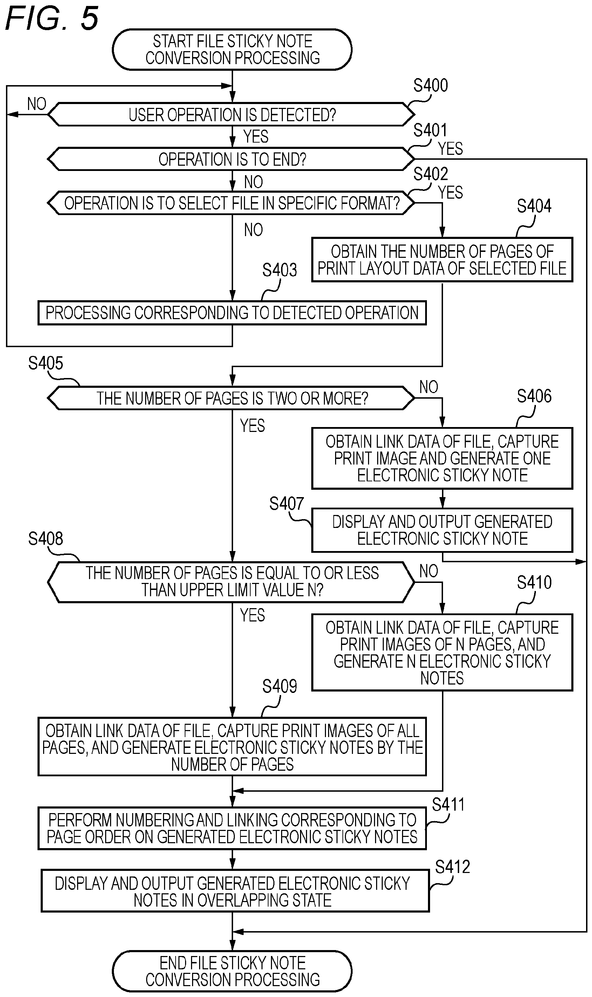

When determining that the operation is to select file sticky note conversion (step S3; YES), the control unit 300 performs file sticky note conversion processing (step S4). As the file sticky note conversion processing in step S4, the control unit 300 performs, for example, the processing illustrated in FIG. 5. In the present specification, the processing of each step illustrated in FIG. 5 is described below as being performed by the user terminal 3 alone, but the processing of one or more steps is performed by the user terminal 3 and the Web system 2.

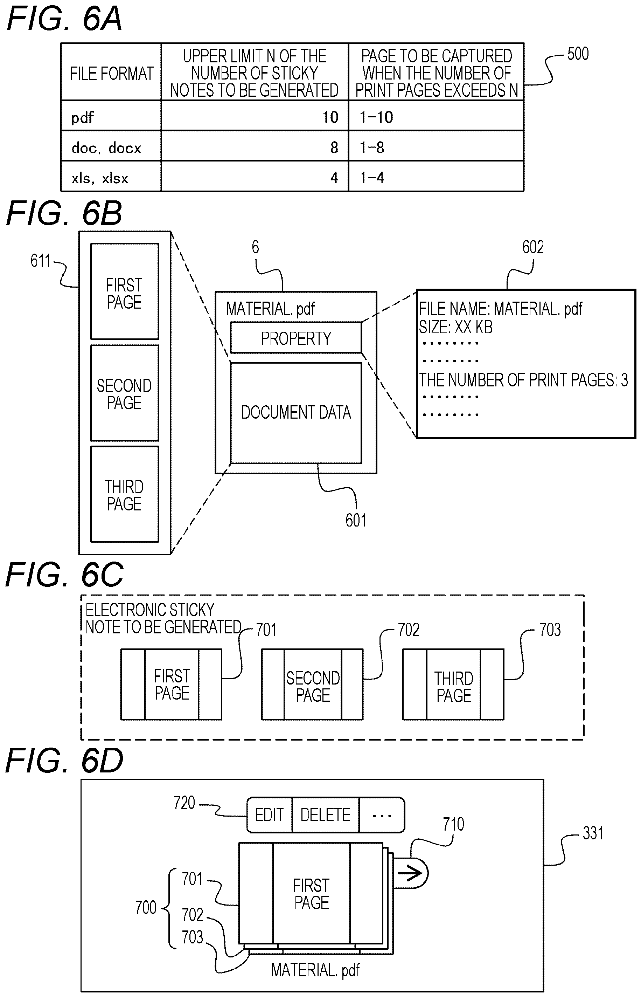

When determining that a user operation is detected (step S400; YES), the control unit 300 of the user terminal 3 that has started the file sticky note conversion processing determines whether the detected user operation is to end the file sticky note conversion processing (step S401). When determining that the user operation is to end the file sticky note conversion processing (step S401; YES), the control unit 300 ends the file sticky note conversion processing. When determining that the user operation is not to end the file sticky note conversion processing (step S401; NO), the control unit 300 subsequently determines whether the user operation is to select a file in a specific format (step S402). The file in a specific format may be, for example, a file whose extension matches an extension of a file format registered in a table 500 illustrated in FIG. 6A. When determining that the operation is not to select the file in a specific format (step S402; NO), the control unit 300 performs processing corresponding to the detected operation (step S403), and then performs the determination in step S400. When determining that the operation is to select the file in a specific format (step S402; YES), the control unit 300 obtains the number of pages of print layout data of a selected file (step S404). The number of pages of the print layout data may be, for example, layout data 611 when document data 601 in an electronic file 6 called "MATERIAL. pdf" illustrated in FIG. 6B is printed by a printer. The number of pages of the print layout data is described in, for example, a property 602 of the electronic file 6.

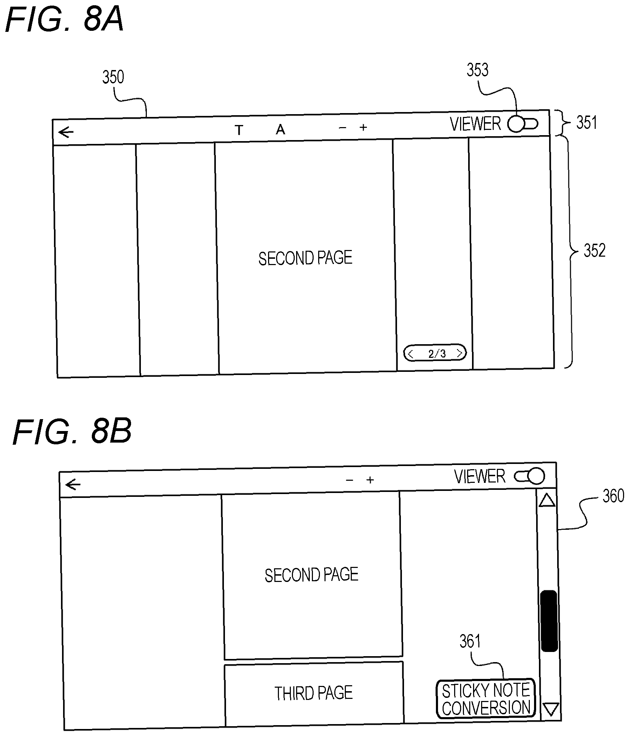

After step S404, the control unit 300 determines whether the obtained number of pages is two or more, that is, whether the obtained number of pages is multiple (step S405). When the number of pages is not two or more (step S405; NO), the control unit 300 obtains link data of the selected file, captures a print image, and generates one electronic sticky note (step S406). Thereafter, the control unit 300 displays and outputs the generated electronic sticky note (step S407), and ends the file sticky note conversion processing. The link data obtained in step S406 may be information indicating a position where the selected file is stored. In step S406, the control unit 300 captures, for example, a print image in the entire page of the print layout data of the selected file or in a predetermined range of the page, and generates an electronic sticky note in which the captured print image is displayed as a summary image (thumbnail) in the background. The electronic sticky note generated in step S406 may be switchable between an editing screen into which text or the like can be written and a browsing screen on which the print layout of the electronic file can be browsed, as will be described later with reference to FIGS. 8A and 8B.

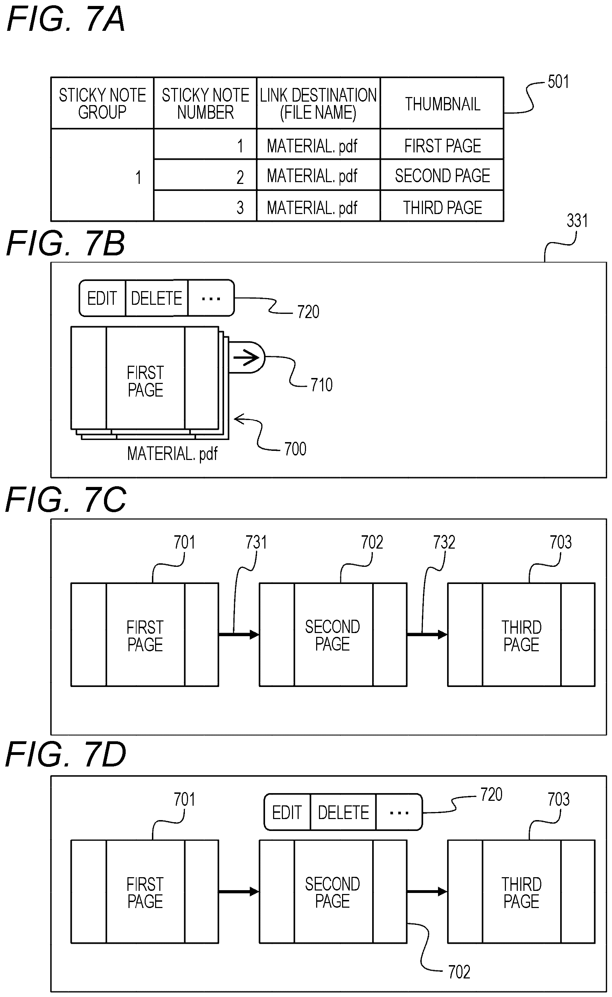

When the number of pages is two or more (step S405; YES), the control unit 300 subsequently determines whether the number of pages is equal to or less than an upper limit value N (step S408). For example, the upper limit value N may be individually set for each file format as illustrated in the table 500 of FIG. 6A, but may be a value common to all file formats. The upper limit value N is not limited to the values exemplified in the table 500 illustrated in FIG. 6A. When determining that the number of pages is equal to or less than the upper limit value N (step S408; YES), the control unit 300 obtains link data of the file, captures print images of all pages, and generates electronic sticky notes by the same number as the number of pages (step S409). When determining that the number of pages is not equal to or less than the upper limit value N (step S408; NO), the control unit 300 obtains link data of the file, captures print images of N pages, and generates N electronic sticky notes (step S410). In a case in which the upper limit value N = 10, the page range to be captured in step S410 may be, for example, from a first page to a tenth page as illustrated in the table 500 of FIG. 6A, but is not limited to a specific page range. The page range may be changed by a user operation. The page range for capturing the print image can be set individually for each file format as illustrated in the table 500 of FIG. 6A. For example, it is set in the table 500 illustrated in FIG. 6A that 10 pages are captured for a pdf file, that is, 10 electronic sticky notes are generated, 8 pages are captured for a document format file such as a Word file, that is, 8 electronic sticky notes are generated, and 4 pages are captured for a spreadsheet format file such as an Excel (registered trademark) file, that is, 4 electronic sticky notes are generated. In an actual operation, for example, in the case of the spreadsheet format file, it is desirable that the entire displayed content can be viewed as a summary image (that is, even if the spreadsheet format file is divided into too many pages, there is no opportunity to view the pages as electronic sticky notes), and the number of electronic sticky notes that can be generated for each file format is set based on a use method at an actual site, but the setting content can be appropriately changed, or a common value may be used for all file formats. In steps S409 and S410, the control unit 300 generates a plurality of electronic sticky notes having different print images to be displayed in the background as summary images. After step S409 or S410, the control unit 300 performs numbering and linking corresponding to the page order on the generated electronic sticky notes (step S411). In step S411, the control unit 300 performs, the numbering managed by a sticky note group and sticky note numbers as illustrated in the table 501 of FIG. 7A, for example, and the linking based on link data of the file. The sticky note number is assigned based on the page order of the thumbnails (summary images) of the electronic sticky notes. After step S411, the control unit 300 displays and outputs the generated electronic sticky notes in an overlapping state (step S412), and ends the file sticky note conversion processing.

For example, if the upper limit value N is 10 when the electronic file 6 having the number of print pages of three illustrated in FIG. 6B is converted into a sticky note, the control unit 300 generates three electronic sticky notes 701 to 703 having different thumbnails illustrated in FIG. 6C in step S409. In the three generated electronic sticky notes 701 to 703, for example, a print image captured from a print layout is displayed as a background, and thus text, handwritten characters, figures, and the like can be written into the print image by layer synthesis. After generating the electronic sticky notes, the control unit 300 performs numbering and linking as illustrated in the table 501 of FIG. 7A on the three generated electronic sticky notes 701 to 703 (step S411). Subsequently, as illustrated in FIGS. 6D and 7B, the control unit 300 displays an electronic sticky note group 700 in which the three electronic sticky notes 701 to 703 are overlapped in the page order of the thumbnails (step S412). The electronic sticky note group 700 is displayed in a state in which the electronic sticky note having a thumbnail with a large page number is overlapped on a back surface side. When the electronic sticky note group 700 is displayed, an object 710 for expanding and displaying a plurality of electronic sticky notes displayed in an overlapping manner is displayed at a position adjacent to the electronic sticky note group 700. In addition, when the electronic sticky note group 700 is displayed, a menu 720 that enables processing such as editing of the electronic sticky note included in the electronic sticky note group 700 is displayed at a position adjacent to the electronic sticky note group 700.

As described above, in the learning system 1 according to the illustrative embodiment, when converting an electronic file having a plurality of pages of print layout data into sticky notes, a plurality of electronic sticky notes in which different pages are displayed as thumbnails (backgrounds) can be collectively generated by one operation. In addition, the plurality of generated electronic sticky notes are numbered and linked using the table 501 illustrated in FIG. 7A or the like. Therefore, when an operation of pressing the object 710 (see FIG. 7B) adjacent to the electronic sticky note group 700 displayed in a state in which the plurality of electronic sticky notes overlap each other is detected, as illustrated in FIG. 7C, the electronic sticky notes 701 to 703 are displayed in the page order of the thumbnails without overlapping each other, and the adjacent electronic sticky notes are coupled with association objects 731 and 732 such as arrows. Therefore, even when other electronic sticky notes are displayed in the work area 331 (see FIG. 3) of the note screen 330, the electronic sticky notes 701 to 703 for the same electronic file can be easily identified. Accordingly, the interaction process between the user and the control unit 200 of the Web system 2 and the control unit 300 of the user terminal 3 can reliably support the user in executing a technical task (processing of generating electronic sticky notes from a file having a plurality of pages).

In addition, when an operation of selecting any one of the electronic sticky notes 701 to 703 which are expanded and displayed is detected, as illustrated in FIG. 7D, an electronic sticky note which is a target of processing such as editing can be easily identified by displaying the menu 720 which enables processing such as editing with respect to the selected electronic sticky note 702 at a position adjacent to the electronic sticky note 702. **In** a case in which the user performs an operation of pressing a portion of "EDIT" in the menu 720 illustrated in FIG. 7D, for example, an editing screen 350 on which editing or the like on the second page is possible as illustrated in FIG. 8A is displayed on the display unit 303 of the user terminal 3. The editing screen 350 includes a menu area 351 in which writing of text, handwritten characters, or objects can be selected, and an editing area 352 in which a print image of the second page of the electronic file is displayed. A switch 353 for switching between the editing screen 350 and a viewer screen is displayed in the menu area 351, and the display of the display unit 303 is switched from the editing screen 350 to a browsing screen 360 of the electronic file illustrated in FIG. 8B by switching the switch 353. On the browsing screen 360, it is possible to browse all pages of the electronic file including pages that are thumbnails. At this time, by designating and associating the electronic file as a link destination of the plurality of electronic sticky notes, the entire electronic file can be viewed from any electronic sticky note of the plurality of electronic sticky notes. In addition, a sticky note conversion button 361 is arranged on the browsing screen 360, and a new electronic sticky note in which a page displayed when the sticky note conversion button 361 is pressed is used as a thumbnail can be additionally generated.

In related electronic sticky note generation processing, for example, after a plurality of electronic sticky notes are generated while changing a display page on the browsing screen 360 illustrated in FIG. 8B, since the plurality of electronic sticky notes are linked in the page order, it takes time and effort to generate a plurality of electronic sticky notes having different thumbnail pages. With respect to this, in the file sticky note conversion processing according to the illustrative embodiment described above, a plurality of electronic sticky notes having different thumbnail pages can be automatically generated by one operation. That is, in the electronic sticky note generation processing according to the illustrative embodiment described above, for example, a plurality of electronic sticky notes for an electronic file having a print layout of a plurality of pages can be easily generated. An electronic file to be processed in and after step S404 illustrated in FIG. 5 is not limited to the combination of files having the extensions illustrated in the table 500 of FIG. 6A. For example, the electronic file to be processed in and after step S404 may be only a file whose extension is pdf. **In** addition, a file having an extension different from the extensions illustrated in the table 500 may be processed in and after step S404.

In addition, for example, by setting the upper limit value N when generating a plurality of electronic sticky notes for an electronic file having a print layout of a plurality of pages, it is possible to prevent an increase in processing load due to an excessive increase in the number of electronic sticky notes to be generated by one operation, compression of a storage area, and the like. The upper limit value N is not limited to a specific value such as N = 10 exemplified in the present specification. The upper limit value N may be a fixed value or a value that can be set by the user. In addition, the page range to be captured when the number of pages in the print layout in the electronic file exceeds the upper limit value N is not limited to the exemplified ranges each including the first page. The page range to be captured may be fixed or may be set by the user. Further, in the electronic sticky note generation processing according to the illustrative embodiment described above, a new electronic sticky note can be generated from the browsing screen of the generated electronic sticky notes. Therefore, after generating a plurality of electronic sticky notes for an electronic file having a print layout of a plurality of pages, an electronic sticky note of a desired page can be additionally generated.

The illustrative embodiment described above is a specific example for facilitating understanding of the present disclosure, and the present disclosure is not limited to the illustrative embodiment described above. The information processing device, the display method, and the computer program can be variously modified and changed without departing from the description of the claims.

## Claims

1. An information processing device comprising:
a processor configured to generate an electronic sticky note on which a print image of a selected electronic file is displayed,
wherein in a case where it is determined that the electronic file is to be printed over a plurality of pages, the processor is configured to generate a plurality of the electronic sticky notes corresponding to the number of pages.

2. The information processing device according to claim 1, wherein the processor is configured to:
in a case where the number of pages of the electronic file exceeds an upper limit value, generate the electronic sticky note by the same number as the upper limit value; and
in a case where the number of pages of the electronic file does not exceed the upper limit value, generate the electronic sticky note by the same number as the number of pages.

3. The information processing device according to claim 2,
wherein the upper limit value is set according to a file format of the electronic file, and
wherein in the case where the number of pages of the electronic file exceeds the upper limit value, the processor is configured to generate the electronic sticky note by the same number as the upper limit value in accordance with the file format.

4. The information processing device according to claim 2,
wherein the processor is configured to generate the plurality of electronic sticky notes on which a print image of each page from a first page to a page specified by the upper limit value of the electronic file is displayed.

5. The information processing device according to claim 1,
wherein the processor is configured to further generate a predetermined association object, the association object being displayed in a case where the plurality of generated electronic sticky notes are associated in a page order of the print image displayed on each of the electronic sticky notes and are displayed without overlapping each other, for connecting the electronic sticky notes adjacent to each other in the page order based on the association.

6. The information processing device according to claim 1,
wherein the processor is configured to associate the plurality of electronic sticky notes with the electronic file as a link destination.

7. A display method performed by an information processing device, the method comprising:
generating an electronic sticky note on which a print image of a selected electronic file is displayed; and
displaying the generated electronic sticky note,
wherein in a case where it is determined that the electronic file is to be printed over a plurality of pages, the method comprises generating, by the information processing device, a plurality of the electronic sticky notes corresponding to the number of pages.

8. A computer program for causing an information processing device to:
generating an electronic sticky note on which a print image of a selected electronic file is displayed,
wherein in a case where it is determined that the electronic file is printed over a plurality of pages, the computer program causes the information processing device to generate a plurality of the electronic sticky notes corresponding to the number of pages.
